# EUROPEAN PATENT SPECIFICATION

(11) **EP 2 905 760 B1**
(45) Date of publication and mention of the grant of the patent: **15.04.2020**
(21) Application number: 15152220.8
(22) Date of filing: 22.01.2015
(51) Int. Cl.: G08B 21/22, G01S 5/02, G06Q 90/00, G08B 21/02, H04W 4/02, G08B 7/06, G08B 27/00

(54) **System and method for location tagged headcount accounting**
System und Verfahren für standortmarkierte Mitarbeiterzahlberechnung
Système et procédé de comptabilité de dénombrement des effectifs étiquetés de localisation

(30) Priority: 05.02.2014 US 201414173423
(43) Date of publication of application: 12.08.2015
(73) Proprietor: Honeywell International Inc., Morris Plains, NJ 07950 (US)
(72) Inventor: Kamalakannan, Arunkumar, Morristown, NJ 07962-2245 (US); Kumar, Nukala Sateesh, Morristown, NJ 07962-2245 (US); Gulaguli, Shashikant G., Morristown, NJ 07962-2245 (US)
(74) Representative: Haseltine Lake Kempner LLP

(56) References cited:
- WO-A2-2005/104724
- WO-A2-2007/145890
- WO-A2-2010/117849
- CA-A1- 2 513 733
- US-A1- 2005 086 261
- US-A1- 2007 159 332
- US-A1- 2009 253 402

## Description

### FIELD

The field relates to safety systems and more particularly to methods of locating authorized persons in emergency conditions.

### BACKGROUND

Safety systems are generally known. Such systems are typically used to detect threats within a secured area.

In order to detect threats, a number of sensors may be distributed throughout the secured area. The sensors may include smoke detectors, intrusion detectors or any of a number of other types of sensors intended to detect threats to life and safety.

The sensors may be monitored by a local control panel. Upon detection of activation of one of the sensors, the control panel may send an alarm message to a central monitoring station identifying a geographic location of the secured area and the type of threat. The central monitoring station may respond by summoning the appropriate help (e.g., fire department, police department, etc.).

In addition to monitoring the sensors, the local control panel may also include a display with an indicator light for each sensor along with text that suggests a location of each sensor. Upon activation of any sensor, a light on the control panel may be activated in order to allow security personnel to quickly address the threat.

Patent documents number WO2007/145890A2 describes a method for accounting for individuals in an emergency at industrial facilities utilizing Ultra-Wideband (UWB) transmitters associated with individuals or objects and UWB monitoring stations. Identification information received from the UWB transmitters by UWB monitoring stations are communicated along with time of arrival information to a computer which calculates the location of the UWB transmitter. The system can be used despite severe multi-path effects and can provide location information in 3 dimensions. The system can optionally include proximity-based RF equipment for access control or otherwise for identification in specific locations. Information from the proximity-based RF equipment is also sent to the computer which also receives information from the UWB monitoring stations.

Patent document number WO2005/104724A2 describes an occupant management method that associates occupant information with information about a physical area. The method generates a hierarchical representation of a physical area such as a building or the like. The hierarchical representation is used to manage occupants of the physical area. Contact information for occupants can be maintained and associated with a physical location, and/or directions can be provided from a starting point to a designated destination point. The hierarchical representation can be used to facilitate two-way communication between an occupant and an emergency responder during an emergency event. Further, a response plan can be defined for an emergency event and implemented when the emergency event is identified.

Patent document number US2007/159332A1 describes systems, methods and devices for using body-worn RFID tags related instrumentation located in the premises where a monitored person is located to prevent or detect specific types of movements of the person, such as falls from which the person has not recovered, wandering, bed egress, attempted room egress, and medication errors. The body-worn RFID tags may include an upper body RFID tag located in a wrist band and a lower body RFID tag located in a sock worn by the monitored person. The RFID instrumentation located in the premises may include one or more antennas located in the floor, door, bed frame, and mattress. The systems may also activate response actions upon detecting specified movements, such as sending an alert message to a patient monitoring system, activating an alarm, activating an camera, and/or playing a recorded message to the person.

While existing safety systems work well in identifying threats, they are not very well equipped to identify people at risk from the detected threat. Accordingly, a need exist for better methods of aiding emergency personnel in helping people at risk from safety threats.

The present invention in its various aspects is as set out in the appended claims.

### BRIEF DESCRIPTION OF THE DRAWINGS

FIG. 1 is a simplified block diagram of a safety system shown generally in accordance with an illustrated embodiment;
FIG. 2 depicts a monitoring panel and sensor of the system of FIG. 1; and
FIG. 3 is a flow chart of steps that may be used by the system of FIG. 1.

### DETAILED DESCRIPTION OF AN ILLUSTRATED EMBODIMENT

While embodiments can take many different forms, specific embodiments thereof are shown in the drawings and will be described herein in detail with the understanding that the present disclosure is to be considered as an exemplification of the principles hereof, as well as the best mode of practicing same. No limitation to the specific embodiment illustrated is intended.

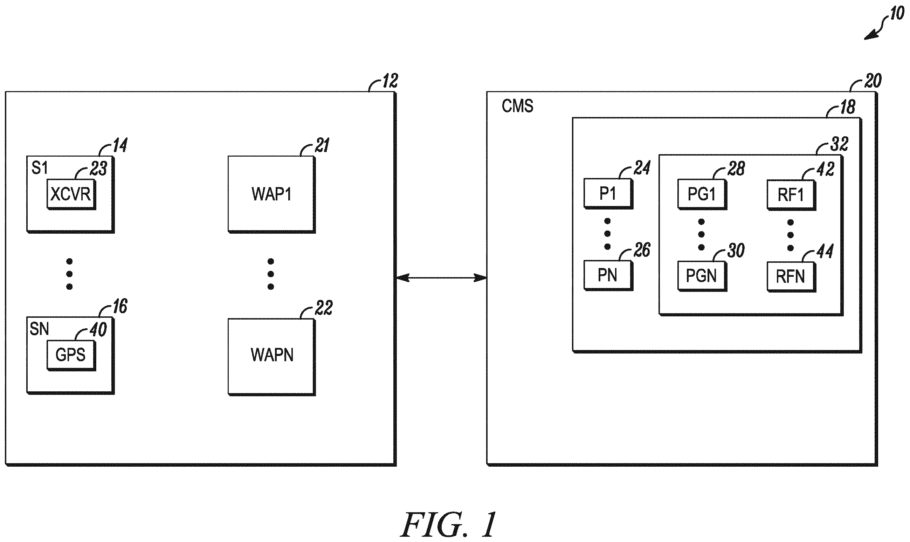

FIG. 1 is a block diagram of a safety system 10 shown generally in accordance with an illustrated embodiment. Included within the safety system is a number of sensing devices or sensors 14, 16 that detect threats within a secured area 12. The sensing devices may be coupled to a monitoring panel 18 within a central monitoring station 20 via one or more wireless access points 21, 22 located within the secured area.

The monitoring panel and sensing devices may communicate using a wireless format. In this regard, a transceiver 23 within each of the sensing devices may exchange messages with the monitoring panel through a respective wireless access point 21, 22.

The monitoring panel and sensors may also include circuitry that incorporate certain monitoring and communication protocols discussed in more detail below. The circuitry may include one or more processing apparatus (processors) 24, 26 that each operate under control of one or more respective computer programs 28, 30 loaded from a non-transient computer readable medium (memory) 32. As used herein, reference to a step of a program is also reference to the processor that executed that step.

The sensors may be structured for any of a number of different objectives. For example, some of the sensors may environmental sensors (e.g., fire, smoke, natural gas, toxic gases, etc.). In these cases, a corresponding environmental or alarm processor may monitor a state of each of these sensors.

Operating in conjunction with the alarm processor may be a status processor that evaluates the threat posed by activation of each sensor. In this regard, the threat posed by activation of any sensor may be evaluated via the content of a response file 42, 44.

Under one particular illustrated embodiment, at least some of the sensors may be portable wireless devices worn by (e.g., attached to the clothing of) persons located within portions of the secured area. There portable sensors may include one or more detectors that detect environmental threats (e.g., smoke, carbon monoxide, heat, toxic gases, explosive gases, etc.).

Other stationary sensors may be placed throughout the secured area to also detect environmental threats. Input from the portable and stationary sensors may be used to detect localized threats within the secured area.

In the case of environmental threats (e.g., fire, carbon monoxide, etc.), the status processor, an environmental processor and/or alarm processor may be programmed to immediately set an alarm upon detection of a threat. The status processor may also set a flag to identify and confirm evacuation of the affected area.

For example, each of the portable wireless sensors may include a geographic positioning device 40. The geographic positioning system may be a Global Positioning System (GPS) or may be based upon other types of devices. In response to a detected environmental threat, a positioning processor may respond to the flag of the status processor by sending a location request to each of the portable sensors. Each of the geographic positioning devices may respond with a set of geographic coordinates that define the location of the device (and person) within the secured area.

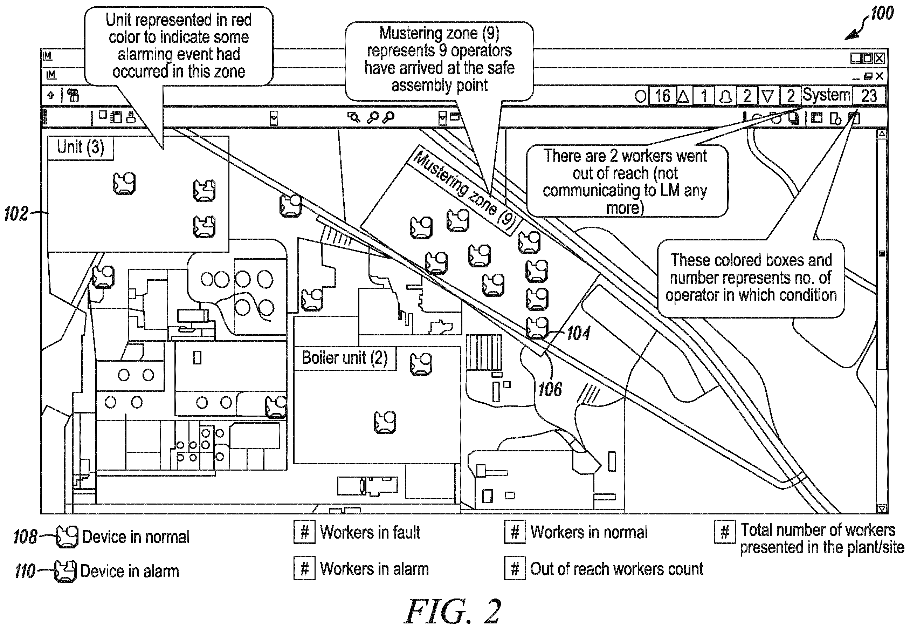

Operating in conjunction with the positioning processor may be a mapping processor that generates a map of the secured area from an associated map file. FIG. 2 depicts a screen 100 showing a map of the secured area that may be generated by the mapping processor and shown on the display of the user interface. Within the map file, the authorized person may have previously identified a number of predefined (e.g., work) areas or zones 102 based upon known hazards associated with that identified area. The authorized person may also have previously identified a number of mustering zones 106 into which evacuated persons may escape for safety and a list of persons authorized to enter each of the predefined zones or the secured area in general.

Shown along the bottom of the screen of FIG. 2 is a key for understanding the appearance of the icons associated with portable devices carried by persons within the secured area. For example, a first icon 108 depicts the appearance of a portable device that would be shown within the map when the associated sensor has not detected a threat. A second icon 108 shows how the portable devices are shown within the map when the associated sensor has detected a threat.

Under the illustrated embodiment, the alarm processor may detect threats and the location of detected threats based upon the known location of stationary sensors or upon the location information from portable device. Upon detecting a threat, the alarm processor may first retrieve a response file 42, 44 based upon the type of sensor activated and the detected threat involved. For example, a threat presented by activation of a toxic gas detector may be different that the threat presented by detection of heat. The response file for activation of a toxic gas sensor may require immediate activation while activation of a heat sensor may simply present an alert on the user interface requiring that safety personnel go to the location of the switch and investigate the threat.

In addition, a threat based upon a measured environmental factor may have a variable response based upon its location within the secured area and upon the predefined zones, if any, associated with the threat. For example, some environmental threats may require evacuation while other threats would not. Upon detection of an environmental threat in one of defined areas, the zone may be highlighted along with an associated mustering area.

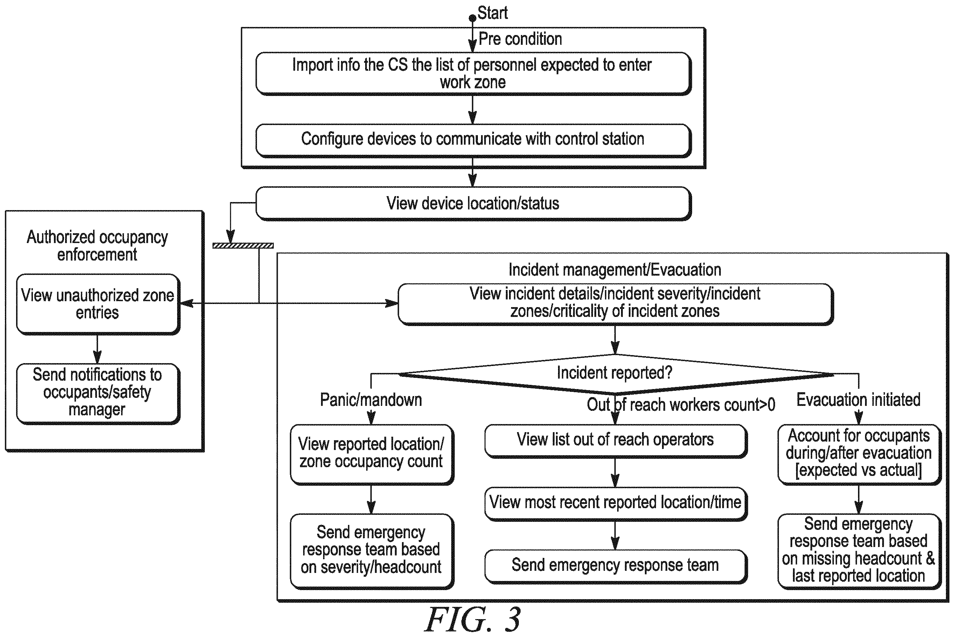

FIG. 3 depicts a flow chart of steps performed by one or more of the processors and displayed on the user interface. As shown in FIG. 3, an evacuation processor may first import information from the response files including a list of persons authorized to be within the secured area or any zone thereof. The mapping processor may also present a map of the secured area showing each person on the map. In this regard, the location processor may retrieve the geographic coordinates of each person and compare them with the geographic coordinates of the secured area and any defined zones within the secured area to identify the relative location of each person within the secured area. A presentation processor may then depict an icon 108 of each person at their identified geographic location within the map.

Operating in the background may be a tracking processor that compares the current location of each person carrying a portable sensor with a set of authorized locations previously provided by the authorized person through the user interface. In non-alarm situations, where a discrepancy is detected (indicating that a person authorized to be within the secured area but not authorized to be within one of the predefined zones), a notification is provided on the screen 100. Notification may also be provided to the person through a speaker on the portable device. This notification may be in the form of a voice message identifying the person, the location and providing instructions to leave the area.

Upon detection of an environmental threat, the alarm processor may present details of the threat on the map of the screen 100. In this case, a predefined area 102 in which the event is detected may be highlighted as shown in FIG. 2. If the response file provides instructions that an evacuation is indicated, then the alarm processor may provide instructions over a public address system within the secured area (or effected zone) to leave the affected area and report to the mustering zone.

As part of this process, the tracking processor may retrieve a list of persons that are within the secured area and begin tracking the movement of each respective person. If a person is initially detected as being immobile (i.e., does not show any movement after issuance of the evacuation order), then an identifier of the person and the person's location may be added to a panic/man down list. If the lack of movement continues, then an alert is issued on the user interface that an emergency response team should be dispatched to the location of the person. This may be based upon the detection of a single immobile person or based upon headcount.

The tracking processor may also form a second list of any missing persons known to be carrying a portable sensor that is not reporting its geographic location. This may be because the portable device has been collaterally damaged as a direct or indirect result of the occurrence of the threat.

In this case, the tracking processor retrieves the geographic location most recently reported by the person's portable sensor as a first indication of the missing person's location. If the portable device does not report an updated location within a predetermined time period, then the tracking processor provides an alert on the screen indicating that an emergency response team should be sent to the last known location of the person.

The evacuation processor receives information from the tracking processor and depicts the location of each person on the map along with indication of the state of the sensor provided by the portable detector carried by the person. As each person arrives within the mustering zone, an identifier of the person is added to a list of safely evacuated person. Those persons outside of the mustering zone are shown in their then current location on the map.

It should be noted that any person outside of the mustering zone could be subsequently added to the man down list or missing persons (can't be reached) list. This provides a real time view of the status of evacuation. For example, emergency personnel may be dispatched first to persons located within the highlighted zone of FIG. 2 while persons outside of the highlighted zones (contained in the man down list or can't be reached list) are helped after the highlighted area has been cleared of personnel.

Under another embodiment, the system may track missing persons via their proximity to other persons. Under this embodiment a processor of a safety system may first identify a missing person within a secured area of the safety system via a portable wireless sensor carried by the missing person and then identify a last known location of the missing person via a most recent signal from the wireless sensor. Next, a processor may identify any nearby persons of the missing person via a portable wireless sensor carried by each of the nearby persons during a time of the most recent signal from the wireless sensor of the missing person. Finally, a processor may determine a status of the portable wireless sensor of the missing person at the time of the most recent signal from the missing person. By knowing a status of the sensor at the time a person went missing, safety personnel are able to better determine a likely status of the person. Similarly, by identifying any nearby persons, safety personnel are able to contact those nearby persons to better able determine a likely whereabouts of the missing person.

The system offers a number of advantages over prior systems. For example, the display of FIG. 2 may contain a time indicator of the time interval since the event was first detected. In addition, since the system operates based upon fixed and portable sensors, the area highlighted can be expanded in real time as the affected area expands.

For search and rescue personnel, the display offers emergency personnel the ability to view the nature of the incident, the time since the incident occurred and the number of personnel remaining in the area of the incident. This allows search and rescue personnel to better estimate the number of first responders necessary to help the injured.

The system helps in safety maintenance by providing a historical headcount or number of occupants in any given zone. This may be important in being able to determine the size of exits and number of exits to ensure quick evacuations.

The system also provides proof of compliance for safety audits (as part of a post incident analysis or normal safety audit). This proof can be used for establishing compliance with internal/external OSHA/NIOSH agencies.

The system has a more immediate effect in verifying the headcount in the mustering zone in case of an incident or emergency. This can be important for post incident analysis especially where the headcount is provided on a minute by minute basis since detection of the incident. These records can be maintained as proof for OSHA/NIOSH compliance.

In general, the system includes processing that incorporates the steps of a first file within a non-transitory computer readable medium defining a set of geographic coordinates of a work area, a second file within a non-transitory computer readable medium defining a set of geographic coordinates of a mustering zone, a plurality of portable wireless sensors, each having a geographic positioning system, each carried by a person within the work area and each determining its geographic location, an environmental monitoring system detecting a threat within the work area, a processor detecting a location of each of the plurality of wireless sensors and a processor generating an alert for each of the plurality of portable sensors that have not arrived within the mustering area within a predetermined time after the detected threat.

Alternatively, the system includes a first file within a non-transitory computer readable medium that defines a set of geographic coordinates of a work area, a second file within a non-transitory computer readable medium that defines a set of geographic coordinates of a mustering zone, a plurality of portable wireless sensors, each having a geographic positioning system and each carried by a person within the work area, an environmental monitoring system that detects a threat within the work area, a processor that detects a location of each of the plurality of wireless sensors and a processor that generates an alert for each of the plurality of portable sensors that have not arrived within the mustering area within a predetermined time after the detected threat.

As a still further alternative, the system includes a safety system that protects a secured area, a first file within a non-transitory computer readable medium of the safety system that defines a set of geographic coordinates of a work area within the secured area, a second file within a non-transitory computer readable medium of the safety system that defines a set of geographic coordinates of a mustering zone within the secured area, a plurality of portable wireless sensors, each having a geographic positioning system and each carried by a person within the work area, an environmental monitoring system of the safety system that detects a threat within the work area, a processor that detects a location of each of the plurality of wireless sensors and a processor that generates an alert for each of the plurality of portable sensors that have not arrived within the mustering area within a predetermined time after the detected threat

From the foregoing, it will be observed that numerous variations and modifications may be effected. It is to be understood that no limitation with respect to the specific apparatus illustrated herein is intended or should be inferred. It is, of course, intended to cover by the appended claims all such modifications as fall within the scope of the claims.

## Claims

1. A method, comprising:
defining a set of geographic coordinates of a work area (102) and a set of geographic coordinates of a mustering zone (106);
determining the geographic location of each of a plurality of portable wireless sensors of an environmental monitoring system, each carried by a person within the work area (102), each having a geographic positioning system (40) and each determining its geographic location;
detecting a threat within the work area by one of the plurality of portable wireless sensors;
evaluating the threat posed by activation of each sensor via a response file;
depicting the location of each of the plurality of wireless sensors on a map along with an indication of the threat detection state of the sensor provided by the portable wireless sensors;
generating, by a processor (24), an alert for each of the plurality of portable sensors that have not arrived within the mustering area (106) within a predetermined time after the detected threat;
identifying by the processor (24) a missing person within a secured area of the safety system via a portable wireless sensor of the plurality of wireless sensors carried by the missing person;
identifying by the processor (24) a last known location of the missing person via a most recent signal from the portable wireless sensor;
identifying by the processor (24) any nearby persons of the missing person via a portable wireless sensor carried by each of the nearby persons during a time of the most recent signal from the wireless sensor of the missing person; and
determining by the processor (24) a status of the portable wireless sensor carried by the missing person at the time of the most recent signal from the portable wireless sensor.

2. The method as in claim 1 further comprising monitoring, by the processor (24), motion of each of the plurality of wireless sensors.

3. The method as in claim 2 further comprising generating, by the processor (24), a man down alert upon failing to detect motion for a predetermined amount of time.

4. The method as in claim 2 further comprising generating, by the processor (24), a missing person alert upon failing to detect the location of one of the plurality of wireless sensors.

5. The method as in claim 1, wherein the threat further comprises a fire.

6. The method as in claim 1 wherein at least some of the plurality of portable wireless sensors further comprise environmental sensors.

7. The method as in claim 6 wherein the detection of threat further comprises the environmental monitoring system receiving a threat indication from one of the plurality of sensors carried by person.

8. The method as in claim 7 wherein the threat indication further comprises a gas reading.

9. The method as in claim 7 wherein the threat indication further comprises a smoke reading.

10. The method as in claim 1 further comprising displaying a map showing the work area (102), the muster zone (106) and a respective indication of each of the plurality of persons on the map.

11. An apparatus, comprising:
a first file within a non-transitory computer readable medium (32) that defines a set of geographic coordinates of a work area (102);
a second file within a non-transitory computer readable medium (32) that defines a set of geographic coordinates of a mustering zone (106);
a processor (24) configured to:
determine a geographic location of each of a plurality of portable wireless sensors of an environmental monitoring system, each carried by a person within the work area (102), each having a geographic positioning system and each determining its geographic location;
detect a threat within the work area (102) by one of the plurality of portable wireless sensors;
evaluate the threat posed by activation of each of the plurality of portable wireless sensors;
detect a location of each of the plurality of wireless sensors along with an indication of the threat detection state of the sensor provided by the portable wireless sensors;
generate an alert for each of the plurality of portable sensors that have not arrived within the mustering area within a predetermined time after the detected threat;
identify a missing person within a secured area of the safety system via a portable wireless sensor of the plurality of wireless sensors carried by the missing person;
identify a last known location of the missing person via a most recent signal from the portable wireless sensor;
identify any nearby persons of the missing person via a portable wireless sensor carried by each of the nearby persons during a time of the most recent signal from the wireless sensor of the missing person; and
determine a status of the portable wireless sensor carried by the missing person at the time of the most recent signal from the portable wireless sensor.

12. The apparatus of claim 11 further comprising a safety system.

13. The apparatus as in claim 11 further comprising a processor (24) that monitors motion of each of the plurality of wireless sensors.

14. The apparatus as in claim 13 further comprising a processor (24) that generates a man down alert upon failing to detect motion for a predetermined amount of time.

## Patentansprüche

1. Verfahren, umfassend:
Definieren eines Satzes von geografischen Koordinaten eines Arbeitsbereichs (102) und eines Satzes von geografischen Koordinaten einer Sammelzone (106);
Bestimmen des geografischen Standorts eines jeden einer Vielzahl von tragbaren Drahtlossensoren eines Umgebungsüberwachungssystems, der jeweils von einer Person innerhalb des Arbeitsbereichs (102) getragen wird, wobei jeder ein geografisches Positionierungssystem (40) aufweist und jeder dessen geografischen Standort bestimmt;
Erkennen einer Gefahr innerhalb des Arbeitsbereichs durch einen der Vielzahl von tragbaren Drahtlossensoren;
Bewerten der Gefahr durch Aktivierung eines jeden Sensors mittels einer Antwortdatei;
Darstellen der Position eines jeden der Vielzahl von Drahtlossensoren auf einer Karte zusammen mit einer Anzeige des Gefahrerfassungszustandes des Sensors, der von den tragbaren Drahtlossensoren bereitgestellt wird;
Erzeugen eines Alarms durch einen Prozessor (24) für jeden der Vielzahl von tragbaren Sensoren, die innerhalb einer vorab festgelegten Zeit nach der erfassten Gefahr nicht in der Sammelzone (106) angekommen sind;
Identifizieren einer vermissten Person innerhalb eines gesicherten Bereichs des Sicherheitssystems durch den Prozessor (24) mittels eines tragbaren Drahtlossensors der Vielzahl von Drahtlossensoren, die von der vermissten Person getragen werden;
Identifizieren eines letzten bekannten Standortes der vermissten Person durch den Prozessor (24) mittels einem aktuellsten Signal vom tragbaren Drahtlossensor;
Identifizieren von in der Nähe der vermissten Person befindlichen Personen durch den Prozessor (24) mittels einem tragbaren Drahtlossensor, der von jeder der in der Nähe befindlichen Personen während einer Zeit des letzten Signals vom Drahtlossensor der vermissten Person getragen wird; und
Bestimmen des Status des tragbaren Drahtlossensors durch den Prozessor (24), der von der vermissten Person zum Zeitpunkt des letzten Signals vom tragbaren Drahtlossensor getragen wird.

2. Verfahren nach Anspruch 1, ferner umfassend Überwachen der Bewegung eines jeden der Vielzahl von Drahtlossensoren durch den Prozessor (24).

3. Verfahren nach Anspruch 2, ferner umfassend Erzeugen eines _{"}Person-in-Not"-Alarms durch den Prozessor (24), wenn über eine vorab festgelegte Zeitdauer keine Bewegung erkannt wird.

4. Verfahren nach Anspruch 2, ferner umfassend Erzeugen eines "Person-vermisst"-Alarms durch den Prozessor (24), wenn der Standort eines der Vielzahl von Drahtlossensoren nicht erkannt wird.

5. Verfahren nach Anspruch 1, wobei die Gefahr ferner ein Feuer umfasst.

6. Verfahren nach Anspruch 1, wobei mindestens ein Teil der Vielzahl von tragbaren Drahtlossensoren ferner Umgebungssensoren umfasst.

7. Verfahren nach Anspruch 6, wobei das Erkennen einer Gefahr ferner umfasst, dass das Umgebungsüberwachungssystem eine Gefahrenanzeige von einem der Vielzahl von von einer Person getragenen Sensoren empfängt.

8. Verfahren nach Anspruch 7, wobei die Gefahrenanzeige ferner eine Gasmessung umfasst.

9. Verfahren nach Anspruch 7, wobei die Gefahrenanzeige ferner eine Rauchmessung umfasst.

10. Verfahren nach Anspruch 1, ferner umfassend Anzeigen einer Karte, die den Arbeitsbereich (102), die Sammelzone (106) und eine jeweilige Anzeige einer jeden der Vielzahl von Personen auf der Karte anzeigt.

11. Vorrichtung, umfassend:
eine erste Datei in einem nicht-flüchtigen computerlesbaren Medium (32), die einen Satz von geografischen Koordinaten eines Arbeitsbereichs (102) definiert;
eine zweite Datei in einem nicht-flüchtigen computerlesbaren Medium (32), die einen Satz von geografischen Koordinaten einer Sammelzone (106) definiert;
einen Prozessor (24), der konfiguriert ist zum:
Bestimmen eines geografischen Standorts eines jeden einer Vielzahl von tragbaren Drahtlossensoren eines Umgebungsüberwachungssystems, die jeweils von einer Person innerhalb des Arbeitsbereichs (102) getragen werden, wobei jeder ein geografisches Positionierungssystem aufweist und jeder dessen geografischen Standort bestimmt;
Erkennen einer Gefahr innerhalb des Arbeitsbereichs (102) durch einen der Vielzahl von tragbaren Drahtlossensoren;
Bewerten der Gefahr durch Aktivierung jeder der Vielzahl von tragbaren Drahtlossensoren ;
Erkennen eines Standortes von jedem der Vielzahl von Drahtlossensoren zusammen mit einer Anzeige des Gefahrerfassungszustands des Sensors, der von den tragbaren Drahtlossensoren bereitgestellt wird;
Erzeugen eines Alarms für jeden der Vielzahl von tragbaren Drahtlossensoren, die innerhalb einer vorab festgelegten Zeit nach der erkannten Gefahr nicht der Sammelzone angekommen sind;
Identifizieren einer vermissten Person in einem gesicherten Bereich des Sicherheitssystems mittels eines tragbaren Drahtlossensors der Vielzahl von Drahtlossensoren, die von der vermissten Person getragen werden;
Identifizieren eines letzten bekannten Standortes der vermissten Person mittels einem aktuellsten Signal vom tragbaren Drahtlossensor;
Identifizieren von Personen in der Nähe der vermissten Person mittels eines tragbaren Drahtlossensors, der von jeder der in der Nähe befindlichen Personen während einer Zeit des letzten Signals vom Drahtlossensor der vermissten Person getragen wird; und
Bestimmen eines Status des tragbaren Drahtlossensors, der von der vermissten Person zum Zeitpunkt des letzten Signals vom tragbaren Drahtlossensor getragen wurde.

12. Verfahren nach Anspruch 11, ferner umfassend ein Sicherheitssystem.

13. Vorrichtung nach Anspruch 11, ferner umfassend einen Prozessor (24), der die Bewegung eines jeden der Vielzahl von Drahtlossensoren überwacht.

14. Vorrichtung nach Anspruch 13, ferner umfassend einen Prozessor (24), der einen _{"}Person-in-Not"-Alarm erzeugt, wenn für eine vorbestimmte Zeitdauer keine Bewegung erkannt wird.

## Revendications

1. Procédé comprenant :
la définition d'un ensemble de coordonnées géographiques d'une zone de travail (102) et d'un ensemble de coordonnées géographiques d'une zone de rassemblement (106) ;
la détermination de la localisation géographique de chacun des capteurs d'une pluralité de capteurs portatifs sans fil d'un système de surveillance de l'environnement, chacun étant porté par une personne à l'intérieur de la zone de travail (102), chacun comportant un système de positionnement géographique (40) et chacun déterminant sa localisation géographique ;
la détection d'une menace à l'intérieur de la zone de travail par l'un des capteurs de la pluralité de capteurs portatifs sans fil ;
l'évaluation de la menace posée par l'activation de chaque capteur, par le biais d'un fichier de réponse ;
l'illustration de la localisation de chacun des capteurs de la pluralité de capteurs sans fil sur une carte avec une indication de l'état de détection de menace du capteur fourni par les capteurs portatifs sans fil ;
la production, par un processeur (24), d'une alerte pour chacun des capteurs de la pluralité de capteurs portatifs qui ne sont pas arrivés à l'intérieur de la zone de rassemblement (106) au cours d'un délai prédéfini après la menace détectée ;
l'identification, par le processeur (24), d'une personne disparue à l'intérieur d'une zone sécurisée du système de sécurité par le biais d'un capteur portatif sans fil de la pluralité de capteurs sans fil porté par la personne disparue ;
l'identification, par le processeur (24), d'une dernière localisation connue de la personne disparue par le biais d'un signal le plus récent provenant du capteur portatif sans fil ;
l'identification, par le processeur (24), de toute personne proche de la personne disparue par le biais d'un capteur portatif sans fil porté par chacune des personnes proches pendant un temps du signal le plus récent provenant du capteur sans fil de la personne disparue ; et
la détermination, par le processeur (24), d'un état du capteur portatif sans fil porté par la personne disparue au moment du signal le plus récent provenant du capteur portatif sans fil.

2. Procédé selon la revendication 1, comprenant en outre la surveillance, par le processeur (24), du mouvement de chacun des capteurs de la pluralité de capteurs sans fil.

3. Procédé selon la revendication 2, comprenant en outre la production, par le processeur (24), d'une alerte d'homme à terre en cas d'échec de détection de mouvement pendant un laps de temps prédéfini.

4. Procédé selon la revendication 2, comprenant en outre la production, par le processeur (24), d'une alerte de personne disparue en cas d'échec de détection de la localisation d'un des capteurs de la pluralité de capteurs sans fil.

5. Procédé selon la revendication 1, dans lequel la menace comprend en outre un incendie.

6. Procédé selon la revendication 1, dans lequel au moins certains des capteurs de la pluralité de capteurs portatifs sans fil comprennent en outre des capteurs environnementaux.

7. Procédé selon la revendication 6, dans lequel la détection d'une menace comprend en outre la réception, par le système de surveillance de l'environnement, d'une indication de menace de l'un des capteurs de la pluralité de capteurs portés par une personne.

8. Procédé selon la revendication 7, dans lequel l'indication de menace comprend en outre une mesure de gaz.

9. Procédé selon la revendication 7, dans lequel l'indication de menace comprend en outre une mesure de fumées.

10. Procédé selon la revendication 1, comprenant en outre l'affichage d'une carte montrant la zone de travail (102), la zone de rassemblement (106) et une indication respective de chacune des personnes de la pluralité de personnes sur la carte.

11. Appareil comprenant :
un premier fichier à l'intérieur d'un support non transitoire lisible par ordinateur (32), qui définit un ensemble de coordonnées géographiques d'une zone de travail (102) ;
un second fichier à l'intérieur d'un support non transitoire lisible par ordinateur (32), qui définit un ensemble de coordonnées géographiques d'une zone de rassemblement (106) ;
un processeur (24), configuré pour :
déterminer une localisation géographique de chacun des capteurs d'une pluralité de capteurs portatifs sans fil d'un système de surveillance de l'environnement, chacun étant porté par une personne à l'intérieur de la zone de travail (102), chacun comportant un système de positionnement géographique et chacun déterminant sa localisation géographique ;
détecter une menace à l'intérieur de la zone de travail (102) par l'un des capteurs de la pluralité de capteurs portatifs sans fil ;
évaluer la menace posée par l'activation de chacun des capteurs de la pluralité de capteurs portatifs sans fil ;
détecter une localisation de chacun des capteurs de la pluralité de capteurs sans fil avec une indication de l'état de détection de menace du capteur, fournie par les capteurs portatifs sans fil ;
générer une alerte pour chacun des capteurs de la pluralité de capteurs portatifs qui ne sont pas arrivés à l'intérieur de la zone de rassemblement au cours d'un délai prédéfini après la menace détectée ;
identifier une personne disparue à l'intérieur d'une zone sécurisée du système de sécurité par le biais d'un capteur portatif sans fil de la pluralité de capteurs sans fil porté par la personne disparue ;
identifier une dernière localisation connue de la personne disparue par le biais du signal le plus récent du capteur portatif sans fil ;
identifier toute personne proche de la personne disparue par le biais d'un capteur portatif sans fil porté par chacune des personnes proches pendant un moment du signal le plus récent du capteur sans fil de la personne disparue ; et
déterminer un état du capteur portatif sans fil porté par la personne disparue au moment du signal le plus récent provenant du capteur portatif sans fil.

12. Appareil selon la revendication 11, comprenant en outre un système de sécurité.

13. Appareil selon la revendication 11, comprenant en outre un processeur (24) qui surveille le mouvement de chacun des capteurs de la pluralité de capteurs sans fil.

14. Appareil selon la revendication 13, comprenant en outre un processeur (24) qui génère une alerte d'homme à terre en cas d'échec de la détection d'un mouvement pendant un laps de temps prédéfini.
